# EUROPEAN PATENT SPECIFICATION

(11) **EP 1 421 852 B1**
(45) Date of publication and mention of the grant of the patent: **07.06.2006**
(21) Application number: 03256980.8
(22) Date of filing: 05.11.2003
(51) Int. Cl.: A01N 43/80, A01N 25/04

(54) **Aqueous dispersion of low-melting organic solids**
Wässrige Dispersion von organischen Feststoffen mit niedrigem Schmelzpunkt
Dispersion aqueuse de solides organiques à bas point de fusion

(30) Priority: 22.11.2002 US 428414 P; 25.02.2003 US 449894 P
(43) Date of publication of application: 26.05.2004
(73) Proprietor: ROHM AND HAAS COMPANY, Philadelphia, Pennsylvania 19106-2399 (US)
(72) Inventor: Engler, Ernst, 9472 Grabs (CH); Tiedtke, Gerhard, 9473 Gams (CH)
(74) Representative: Kent, Venetia Katherine

(56) References cited:
- EP-A- 0 069 573
- EP-A- 0 249 728
- EP-A- 0 342 134
- EP-A- 0 490 565
- EP-A- 1 060 667
- WO-A-95/00019
- WO-A-97/37538

## Description

This invention relates generally to a stable aqueous dispersion of a low melting, water-insoluble organic solid.

Biocidal active ingredients used for protection of coatings, such as exterior paints need to have low water solubility to prevent rapid leaching upon repeated exposure to rain. Adding such active ingredients into the matrix to be protected therefore can either be done by dosing the powder directly, or by preparing concentrated solutions in organic solvents or flowable dispersions. Handling of pure powders of such biologically active substances in technical manufacturing environments involves significant risk to employees of exposure to toxic dust. Such powders also have a wide variation in particle size which can limit the overall microbiological efficacy.

Solutions of the active ingredient in organic solvents are typically limited in concentration, and thus introduce considerable amounts of organic solvent (VOC) into the environment, and also are rather expensive. Flowable aqueous dispersions can be more concentrated than solutions, have less VOC and secure even distribution and uniform microbiological efficacy due to reduced particle size. They also minimize the risk of workforce exposure to the active ingredient and are commonly used in the industry. However, typically such dispersions start from a solvent solution to ensure even distribution of the active ingredient into the milling process, thus still introducing VOC, although less than solvent based solutions.

European Patent Application No. 1 060 667 discloses a method for producing a suspension of a crystalline solid in water. High-shear mixing was used to produce particles less than 5 microns in size. However, this reference does not teach the use of inorganic fillers. The problem addressed by this invention is to produce a stable aqueous dispersion of a low-melting organic compound with less than 20% organic solvent.

### STATEMENT OF THE INVENTION

The present invention, in its various aspects, is as set out in the accompanying claims.

This invention is directed to an aqueous composition comprising from 15% to 30% of 4,5 dichloro-2-octyl-3(2H)isothiazolone (DCOIT), at least one inorganic filler, at least one surfactant and no more than 5 organic solvent. The composition is stable with regard to agglomeration and phase separation for at least three months at room temperature.

This invention is further directed to a method for producing an aqueous dispersion comprising from 15% to 30% of DCOIT at least one inorganic filler, at least one surfactant and no more than 5% organic solvent; said dispersion being stable with regard to agglomeration and phase separation for at least three months at room temperature. The method comprises combining in water the organic compound, the inorganic filler and the non-ionic surfactant, at a temperature from 0°C to 35°C with agitation to provide a substantially uniform dispersion.

### DETAILED DESCRIPTION OF THE INVENTION

An "organic compound" is a molecule containing no metal atoms, preferably a compound containing carbon and hydrogen atoms and other atoms selected from among nitrogen, oxygen, halogens, phosphorus, and sulfur. An "inorganic filler" is an inorganic material having a particle size less than 100 microns, and capable of remaining suspended in an aqueous dispersion. A "thickener" is a material which alters the rheological properties of an aqueous system to increase low-shear viscosity without greatly increasing viscosity at moderate shear rates, i.e., "pourability."

The water solubility of DCOIT is 2 ppm at 25°C, and its melting point is 40°C. Preferably, the composition contains at least 15% of DCOIT, more preferably at least 18%, and most preferably at least 20%. Preferably, the composition contains no more than 25% of DCOIT.

The composition has no more than 5% organic solvent, preferably no more than 2%, more preferably no more than 1%, and most preferably is substantially free of organic solvent. Preferably, organic solvents in the composition are di-glycol, tri-glycol or tetra-glycol solvents, or mixtures thereof; more preferably di-glycol or tri-glycol solvents, i.e., dimers or trimers of ethylene glycol or propylene glycol, or mixtures thereof. Di-glycol and tri-glycol solvents include, for example, triethylene glycol, dipropylene glycol, tripropylene glycol, and diethylene glycol.

In one preferred embodiment of the invention, the composition contains at least one divalent copper salt. Suitable copper salts include, for example, copper dodecylbenzenesulfonate and copper EDTA complexes, including Na₂CuEDTA. Preferably, the composition contains at least 2% of at least one copper salt, more preferably at least 4%, and most preferably at least 4.5%. Preferably, the composition contains no more than 10% of copper salt(s), more preferably no more than 8%, and most preferably no more than 5.5%.

In the method of this invention, the DCOIT, inorganic filler(s), surfactant(s), and optionally other ingredients, are combined with water with agitation, while the temperature is maintained from 0°C to 35°C. Preferably, the temperature is maintained from 2°C to 30°C, more preferably from 2°C to 25°C, and most preferably from 2°C to 20°C.

Preferably, at least 1% of at least one filler is present in the composition, more preferably at least 3%. Most preferably the amount of filler(s) is at least 6%. Preferably, the amount of filler(s) is no more than 20%, more preferably no more than 15%, and most preferably no more than 10%. Preferred fillers include, for example, calcium carbonate, silica, celite, talc, titanium dioxide, and clay, including kaolin.

Preferably, at least 0.1% of at least one surfactant is present in the composition, more preferably at least 0.2%, more preferably at least 0.5%. Most preferably the amount of surfactant(s) is at least 1%. Preferably, the amount of surfactant(s) is no more than 5%, more preferably no more than 3%, and most preferably no more than 2%. Preferred surfactants include, for example, non-ionic surfactants, including 2,4,7,9-tetramethyl-5-decyne-4,7-diol; C₉-C₁₁ alcohols ethoxylated with about 10 moles of ethylene oxide; and naphthalenesulfonic acid/formaldehyde polymers; and dodecylbenzenesulfonate metal salts.

Preferably, at least one thickener is added to the dispersion. Suitable thickeners include, for example, xanthan gum, silicic acid salts, acrylic acid polymers and copolymers, and colloidal metal silicates. Preferably, the total amount of thickener(s) is from 0.1% to 3%, more preferably from 0.5% to 2%, and most preferably from 1% to 2%.

Preferably, the particle size of the dispersion is reduced to less than 50 microns (µ), preferably less than 30 µ. Particle size is determined either optically, with a scanning electron microscope, or using commercial particle size analyzers, e.g., those using laser light scattering to determine particle size. Typically, smaller particles provide greater stability to the dispersion. Preferably, the dispersion is stable with regard to concentration of the organic solid, as well as being stable with regard to agglomeration of the particles. In one embodiment of the invention, the particles are less than 50 µ, preferably less than 45 µ. In this embodiment, preferably at least 95% of the particles are in the range from 10 µ to 45 µ, more preferably from 15 µ to 40 µ.

The ingredients of the aqueous dispersion are agitated with any mixing equipment capable of producing a stable dispersion, for example, vacuum mixers, rotor/stator homogenizers, in-line emulsifiers, static mixers, piston homogenizers, ultrasonic homogenizers, high-speed jets or nozzles, and ball mills.

In one embodiment of the invention, the DCOIT is dissolved in a solvent comprising at least one di-glycol or tri-glycol solvent prior to addition to other ingredients. Preferably, the amount of solvent is from 0.5 to 1 times the amount of the DCOIT, by weight. Preferably, the solvent is a di-glycol or tri-glycol solvent, or a mixture thereof. In another embodiment, the organic solid is melted prior to addition to the other ingredients. In this embodiment, the organic solvent level preferably is no more than 5%. DCOIT melts at approximately 40°C; preferably the molten DCOIT is added in substantially pure form without solvent.

The composition of this invention is stable with regard to agglomeration and phase separation for at least three months at room temperature, i.e., 20°C to 25°C, and preferably for at least three months at 35°C.

### EXAMPLES

### Example 1: Dispersion of DCOIT from DCOIT Solution

DCOIT (600.00 g) was crushed and dissolved by introducing the lumps into a mixture of 200.00 g dipropylene glycol (DPG) and 225.00 g triethylene glycol (TEG) at 40°C in a 3000 ml round bottom flask on a rotary evaporator. Into this solution 15.60 g of Cu(OH)₂ and 105.30 g dodocylbenezenesulfonic acid (Marlon® AS 3) were added, forming CuDDBS in situ. The resulting solution was introduced into a mixture of 1727.10 g water, 30.00 g Surfinol™ TG/E surfactant (2,4,7,9-tetramethyl-5-decyne-4,7-diol; available from Chemische Fabrik Schweizerhall, Basel, Switzerland), 30.00 g Veegum™ thickener (silicic acid, aluminum magnesium salt; available from Christ Chemie Ltd., Reinach, Switzerland), 30.00 g TiO₂ and 12.00 g Kelzan™ CC thickener (xanthan gum; available from Staerkle & Nagler Ltd., Zurich, Switzerland) and pre-dispersed in 25.00 g DPG in a 6 L stainless steel beaker under gentle stirring (120 rpm). The resulting viscous liquid was pumped into a ball mill (Dynomill® KDL) filled to 80% with glass beads (1 - 1.5 mm particle size), running at 2500 rpm and cooled with EG/water of -5°C at a rate such that the temperature of the dispersion exiting the mill did not exceed 25°C; if necessary the process was stopped to , allow cooling down to < 20°C. The resulting dispersion, viscosity 80 KU, particle size (DIN 53 203) 18 - 25 µ, [20% DCOIT, 7.50 % DPG, 6.30 % TEG, 4.03% CuDDBS stabilizer, 57.57% water and formulation aids to stabilize the dispersion (1% Surfinol™ TG/E, 1% Veegum™, 1% TiO₂, 1.2% TEG, 0.4% Kelzan™)] is stable with regard to viscosity changes and DCOIT concentration for at least 3 months at room temperature and 35°C.

### Example 2: Dispersion of DCOIT from DCOIT Solution

DCOIT (800.00 g) was crushed and dissolved by introducing the lumps into a mixture of 250.00 g DPG and 300.00 g TEG at 40°C in a 3000 ml round bottom flask on a rotary evaporator. The resulting solution was introduced into a mixture of 2056.00 g water, 200.00 g Na₂CuEDTA, 40.00 g Surfinol™ TG/E surfactant, 40.00 g Veegum™, 40.00 g TiO₂, 200.00 g kaolin (Kaolin FP 80, ground; minimum 52% <2 µ; available from Gebr. Dorfner GmbH & Co., Hirschau, Germany) and 24.00 g Kelzan™ CC pre-dispersed in 50.00 g DPG in a 6 L stainless steel beaker under gentle stirring (120 rpm). The resulting viscous liquid was pumped into a ball mill (Dynomill® KDL) filled to 80 % with glass beads (1- 1.5 mm particle size), running at 2500 rpm and cooled with EG/water of -5°C at a rate such that the temperature of the dispersion exiting the mill did not exceed 25°C; if necessary the process was stopped to allow cooling down to < 20°C. The resulting dispersion, viscosity 100 KU, particle size (DIN 53 203) 18 - 28 µ, [20% DCOIT 7.5 % DPG, 6.3 % TEG, and 5.0% Na₂CuEDTA stabilizer in 51.4% water and formulation aids to stabilize the dispersion (1% Surfinol™ TG/E, 1% Veegum™, 1% TiO₂, 1.2% TEG, 0.6% Kelzan™, 5% kaolin)] is stable with regard to viscosity changes and DCOIT concentration for at least 3 months at room temperature and 35°C.

### Example 3: Dispersion of DCOIT from Melted DCOIT

DCOIT (800.00 g) was crushed and melted at 50°C. The liquid DCOIT was poured slowly into a mixture of 2608.00 g water, 200.00 g Na₂CuEDTA, 40.00 g Surfinol™ TG/E surfactant, 40.00 g Veegum™, 40.00 g TiO₂, 200.00 g kaolin and 24.00 g Kelzan™ pre-dispersed in 48.00 g TEG in a 6 L stainless steel beaker under gentle stirring (140 rpm). The resulting viscous liquid was pumped into a ball mill (Dynomill® KDL) filled (80 %) with glass beads (1- 1.5 mm particle size), running at 2500 rpm and cooled with EG/water of -5°C at a rate such that the temperature of the dispersion exiting the mill did not exceed 25°C; if necessary the process was stopped to allow cooling down to < 20°C. The resulting dispersion, viscosity 100 KU, particle size (DIN 53 203) 28 - 33 µ, [20% DCOIT and 5% Na₂CuEDTA in 65.2% water and formulation aids to stabilize the dispersion (1% Surfinol™ TG/E, 1% Veegum™, 1% TiO₂, 1.2% TEG, 0.6% Kelzan™, 5% kaolin)] is stable with regard to viscosity changes and DCOIT concentration for at least 3 months at room temperature and 35°C.

## Claims

1. An aqueous composition comprising from 15 to 30% of 4,5-dichloro-2-octyl-3(2H)-isothiazolone, at least one inorganic filler, at least one surfactant and no more than 5% organic solvent.

2. The composition of claim 1 containing from 18% to 25% of 4,5-dichloro-2-octyl-3(2H)-isothiazolone.

3. The composition of claim 2 in which said at least one inorganic filler comprises titanium dioxide and kaolin in a total amount from 6% to 10%, the composition contains no more than 2% organic solvent, and the composition further comprises at least one thickener and at least 2% of at least one copper salt.

4. The composition of claim 3 in which said at least one organic solvent comprises at least one solvent selected from di-glycol solvents and tri-glycol solvents.

5. A method for producing an aqueous dispersion comprising from 15 to 30% of 4,5-dichloro-2-octyl-3(2H)-isothiazolone, at least one inorganic filler, at least one surfactant and no more than 5% organic solvent; said dispersion being stable with regard to agglomeration and phase separation for at least three months at room temperature; said method comprising combining in water said organic compound, the inorganic filler and the surfactant, at a temperature from 0°C to 35°C with agitation to provide a substantially uniform dispersion.

6. The method of claim 5 in which the dispersion contains from 18% to 25% of 4,5-dichloro-2-octyl-3(2H)-isothiazolone , and the temperature is maintained from 2°C to 25°C.

7. The method of claim 6 in which said at least one inorganic filler comprises titanium dioxide and kaolin in a total amount from 6% to 10%, the dispersion contains no more than 2% organic solvent, and in which the dispersion further comprises at least one thickener and at least 2% of at least one copper salt.

8. The method of claim 7in which the 4,5-dichloro-2-octyl-3(2H)-isothiazolone is melted prior to addition to other ingredients.

## Patentansprüche

1. Wässrige Zusammensetzung, welche von 15 bis 30% 4,5-Dichlor-2-octyl-3(2H)-isothiazolon, mindestens einen anorganischen Füllstoff, mindestens ein grenzflächenaktives Mittel und nicht mehr als 5% organisches Lösungsmittel umfasst.

2. Zusammensetzung nach Anspruch 1, welche von 18 bis 25% 4,5-Dichlor-2-octyl-3(2H)-isothiazolon umfasst.

3. Zusammensetzung nach Anspruch 2, in welcher der mindestens eine anorganische Füllstoff Titandioxid und Kaolin in einer Gesamtmenge von 6% bis 10% umfasst, die Zusammensetzung nicht mehr als 2% organisches Lösungsmittel enthält und die Zusammensetzung ferner mindestens ein Verdickungsmittel und mindestens 2% von mindestens einem Kupfersalz umfasst.

4. Zusammensetzung nach Anspruch 3, in welcher das mindestens eine organische Lösungsmittel mindestens ein Lösungsmittel umfasst, ausgewählt aus Diglycol-Lösungsmitteln und Triglycol-Lösungsmitteln.

5. Verfahren zur Herstellung einer wässrigen Dispersion, umfassend von 15 bis 30% 4,5-Dichlor-2-octyl-3(2H)-isothiazolon, mindestens einen anorganischen Füllstoff, mindestens ein grenzflächenaktives Mittel und nicht mehr als 5% organisches Lösungsmittel, wobei die Dispersion in Bezug auf Agglomeration und Phasentrennung für mindestens 3 Monate bei Raumtemperatur stabil ist, wobei das Verfahren das Vereinigen der organischen Verbindung, des anorganischen Füllstoffs und des grenzflächenaktiven Mittels in Wasser bei einer Temperatur von 0°C bis 35°C unter Rühren umfasst, um eine im Wesentlichen einheitliche Dispersion bereitzustellen.

6. Verfahren nach Anspruch 5, in welchem die Dispersion von 18 bis 25% 4,5-Dichlor-2-octyl-3(2H)-isothiazolon enthält und die Temperatur von 2°C bis 25°C beibehalten wird.

7. Verfahren nach Anspruch 6, in welchem der mindestens eine anorganische Füllstoff Titandioxid und Kaolin in einer Gesamtmenge von 6% bis 10% umfasst, die Dispersion nicht mehr als 2% organisches Lösungsmittel enthält und in welchem die Dispersion ferner mindestens ein Verdickungsmittel und mindestens 2% von mindestens einem Kupfersalz umfasst.

8. Verfahren nach Anspruch 7, in welchem das 4,5-Dichlor-2-octyl-3(2H)-isothiazolon vor der Zugabe zu anderen Inhaltsstoffen geschmolzen wird.

## Revendications

1. Composition aqueuse comprenant de 15 à 30 % de 4,5-dichloro-2-octyl-3(2H)-isothiazolone, au moins une charge inorganique, au moins un agent tensioactif et pas plus de 5 % de solvant organique.

2. Composition selon la revendication 1, contenant de 18 % à 25 % de 4,5-dichloro-2-octyl-3(2H)-isothiazolone.

3. Composition selon la revendication 2, dans laquelle ladite au moins une charge inorganique comprend du dioxyde de titane et du kaolin en une quantité totale de 6 % à 10 %, la composition contient pas plus de 2 % de solvant organique, et la composition comprend en outre au moins un épaississant et au moins 2 % d'au moins un sel de cuivre.

4. Composition selon la revendication 3, dans laquelle ledit au moins un solvant organique comprend au moins un solvant choisi par parmi les solvants di-glycols et les solvants tri-glycols.

5. Procédé de production d'une dispersion aqueuse comprenant de 15 à 30 % de 4,5-dichloro-2-octyl-3(2H)-isothiazolone, au moins une charge inorganique, au moins un agent tensioactif et pas plus de 5 % de solvant organique ; ladite dispersion étant stable par rapport à une agglomération et une séparation de phase pendant au moins trois mois à température ambiante ; ledit procédé comprenant la combinaison dans de l'eau dudit composé organique, de la charge inorganique et de l'agent tensioactif, à une température de 0 °C à 35 °C avec agitation pour former une dispersion sensiblement uniforme.

6. Procédé selon la revendication 5, dans lequel la dispersion contient de 18 % à 25 % de 4,5-dichloro-2-octyl-3(2H)-isothiazolone, et la température est maintenue de 2 °C à 25 °C.

7. Procédé selon la revendication 6, dans lequel ladite au moins une charge inorganique comprend du dioxyde de titane et du kaolin en une quantité totale de 6 % à 10 %, la dispersion contient pas plus de 2 % de solvant organique, et dans lequel la dispersion comprend en outre au moins un épaississant et au moins 2 % d'au moins un sel de cuivre.

8. Procédé selon la revendication 7, dans lequel la 4,5-dichloro-2-octyl-3(2H)-isothiazolone est fondue avant addition des autres ingrédients.
